# EUROPEAN PATENT APPLICATION

(11) **EP 4 729 750 A1**
(43) Date of publication of application: **22.04.2026**
(21) Application number: 24207433.4
(22) Date of filing: 18.10.2024
(51) Int. Cl.: F01P 5/10, B60K 11/02

(54) **COOLANT SUPPLY SYSTEM, METHOD FOR ESTABLISHING A CONNECTION**

(71) Applicant: HELLA GmbH & Co. KGaA, 59552 Lippstadt (DE)
(72) Inventor: WALKE, Elias, 59494 Soest (DE)
(74) Representative: Behr-Wenning, Gregor

(57) **Abstract**

Coolant supply system (100) for vehicles for supplying at least two devices to be cooled with at least one coolant comprising at least one coolant distribution unit (1), comprising: at least one housing body (2) with at least one housing wall (3); and at least one channel unit (4) which is at least partially formed by the housing wall (3); and wherein the channel unit (4) is provided with at least one plurality of ports (5); and at least one plurality of electrical actuator devices (6) receivable on the housing body (4) at the ports (5); and a connecting device (7) for establishing a connection between the actuator device (6) and the housing body (4) so that a flow of the coolant can be influenced, the connecting device (7) being provided for connecting the electric actuator device (6) to the housing body solely by moving the electric actuator device (6) relative to the housing body (4). A securing unit (8) is included, wherein the securing unit (8) includes a mountable securing element (8a) for securing the connection. The invention further comprises a method for establishing a connection.

## Description

The present invention relates to a coolant supply system for vehicles, in particular electric vehicles, hybrid vehicles or vehicles with an internal combustion engine, for supplying at least two devices to be cooled with at least one coolant, comprising at least one coolant distribution unit with a housing body with an electric actuator device and a connecting device for establishing a connection between the actuator device and the housing body.

Various cooling supply systems with connection devices for establishing a connection between an electrical actuator device and the housing body of the coolant distribution unit are known from the state of the art.

DE 10 2022 209 294 A1 discloses a duct system with a bayonet lock for a pump. A connection between the pump and the housing of the duct system is made possible by rotating the pump relative to the housing so that lugs attached to the pump engage behind attachments which are attached to the housing. A fluid tight connection must be guaranteed even after a rough handling during mounting. A visual check of the connection is generally insufficient due to the visual accessibility in the individual installation situations. Reestablishing a fluid tight connection in mounted state is time consuming and cost intensive.

It is therefore the task of the present invention to provide a coolant supply system of the type mentioned at the beginning, which can be assembled more cost-effectively. Furthermore, it is the task of the present invention to provide a method for establishing a connection of the pump to the housing body, which can be produced more cost-effectively.

The task is solved by a coolant supply system with the features according to claim 1 and a method for establishing a connection with the features according to claim 13.

Preferred further embodiments are the subject of the subclaims. Further features and advantages result from the general description and from the description of the embodiment example.

The coolant supply system for vehicles according to the invention for supplying at least two devices to be cooled with at least one coolant has at least one coolant distribution unit, comprising:
- at least one housing body with at least one housing wall; and
- at least one channel unit formed at least partially by the housing wall, with at least one plurality of ports; and
- at least one plurality of electrical actuator devices receivable on the housing body at the ports; and
- a connecting device for establishing a connection between the actuator device and the housing body so that a flow of the coolant can be influenced, the connecting device being provided for connecting the electric actuator device to the housing body solely by moving the electric actuator device relative to the housing body.

The securing unit comprises a mountable securing element, in particular separate from the housing body and the electric actuator device, for securing the connection. In particular, the connection is secured by the securing element by blocking a movement of the electric actuator device relative to the housing body, i. e. using a mountable form lock.

In particular, the electrical actuator device is connected to the housing body by means of a rotary movement of the electric actuator device relative to the housing body.

The invention has many advantages. A significant advantage of the invention is that the securing unit with the securing element provides form locking of the connection. Due to the mounted securing element the connection is particularly insensitive to vibrations or shocks, for example when installing the coolant supply system in the vehicle. The additional assembly work for the securing element is considerably less than the cost for restablishing a fluid tight connection in a mounted state.

Preferably, the securing unit comprises a receiving element for the securing element. Preferably, the receiving element is designed as an opening, in particular as a blind hole. Advantageously, the securing element can be received on or in the receiving element. Advantageously, a defined position of the securing element can be achieved by the receiving element. This makes the connection even more secure.

Particularly preferably, the connection device for establishing the connection comprises interlocking form elements, which are arranged in pairs on the housing body and the electric actuator device. Advantageously, there is a partially positive connection between the electric actuator device and the housing body. In particular, the connection is designed as a bayonet lock. Preferably, the receiving element is formed on a form element. Advantageously, the securing element can be received directly on or in the form element and lock a relative movement of the interlocking form elements to each other. In particular, there are several pairs of interlocking form elements. In particular, the pairs are arranged at least partially on a circumference or a radius, of preferably one of the parts. Preferably, the form elements are arranged asymmetrically to one another so that the connection between the electrical actuator device and the housing body can be established in exactly one position by a rotary movement.

The receiving element is advantageously formed on a pair of interlocking form elements. Advantageously, both form elements can be secured by the securing element in such a way that only a particularly slight or even no relative movement, in particular between the form elements, is possible.

In particular, there is little play between the receiving element and the securing element. Advantageously, the securing element can be accommodated without play in or on the receiving element. In particular, dimensions such as a diameter, of the receiving element and the securing element are designed in such a way that there is a tight fit, a transition fit or even an interference fit in the assembled state of the securing element. In particular, the securing element or the receiving element has a wedge-shaped geometry along a longitudinal axis, at least in sections. Advantageously, a precise alignment of the housing body and the electric actuator device can be achieved due to the small clearance between the receiving element and the received securing element. Furthermore, a comfortable and easy assembly can be achieved.

In particular, the securing element is designed as a bolt and especially as a threaded bolt. A bolt and in particular a threaded bolt are advantageous and cost-effective both as a component and during assembly. In particular, the receiving element comprises a thread for receiving the threaded bolt.

Preferably, the coolant supply system comprises exactly one securing unit with exactly one securing element and in particular one receiving element. Advantageously, a single securing unit with one securing element is sufficient to secure the connection. This makes the coolant supply system particularly cost-effective.

Preferably, the connecting device comprises a latching unit and/or a clamping unit. Advantageously, the latching connection unit and/or the clamping connection unit can provide additional support for the electric actuator device during assembly and when making the connection. In particular, the latching unit and/or the clamping unit are formed on the interlocking form elements. Advantageously, the connection can thus already be fixed in place. Advantageously, this simplifies the assembly of the securing element, further reducing the assembly costs for the coolant supply system.

In particular, the connecting device is at least partially formed in one piece with the housing body and/or with the electric actuator device. In particular, the interlocking form elements of the connecting device are at least integrally formed on the housing body and/or the electric actuator device. Preferably, the coolant supply system is at least partially formed as a plastic injection-molded part. In particular, the form elements are formed as plastic injection-molded parts with the housing body and/or with the electric actuator device. Plastic injection-molded parts are particularly cost-effective to manufacture. Furthermore, the form elements do not have to be assembled separately, which further reduces assembly costs.

Preferably, the interlocking pairs of form elements are designed in such a way that, when the connection is established, they generate a pretension of the electric actuator device in the direction of the housing body so that a fluid-tight connection is ensured. In particular, the form elements have corresponding wedge elements for this purpose, which brace the electric actuator device against the housing body when the connection is made. This has the advantage of further reducing production costs.

In particular, the electric actuator device is designed as a pump, especially a radial pump, or as a valve, especially a control valve, for the coolant supply system. The securing unit is particularly advantageous for pumps that can also introduce periodic movements, vibrations or oscillations into the coolant supply system, which can cause a connection to loosen.

Further features and advantages of the coolant supply system can be seen from the overall general description and from the description of the embodiment example.

The method according to the invention for securely connecting an electric actuator device to a housing body of a coolant system described above comprises at least the following method steps:
- establishing the connection by a movement, in particular at least one rotary movement, of the electric actuator device relative to the housing body; and
- securing the connection by mounting the securing element, in particular by holding it on or in the receiving element.

The method according to the invention also has many advantages. A significant advantage of the method is that the method does not require any subsequent checking of the connection after assembly. Further features and advantages can be seen from the entire general description and from the description of the embodiment example.

Further features and advantages of embodiments of the invention are described below with reference to the drawings. The same reference signs are used for identical or similar parts and for parts with identical or similar functions. It shows:
- Fig. 1: a schematic perspective view of a coolant guide system according to the invention with a part of the housing body;
- Fig. 2: a schematic perspective view of the part of the housing body in the area of the connection for an electrical actuator device of the coolant supply system according to the invention;
- Fig. 3: a schematic perspective view of an electric actuator device designed as a radial pump; and

It is not necessary for a coolant supply system according to the invention and/or a method according to the invention to have all the features described below. It is also possible that a coolant supply system according to the invention and/or a method according to the invention has only individual features of the embodiment example described below.

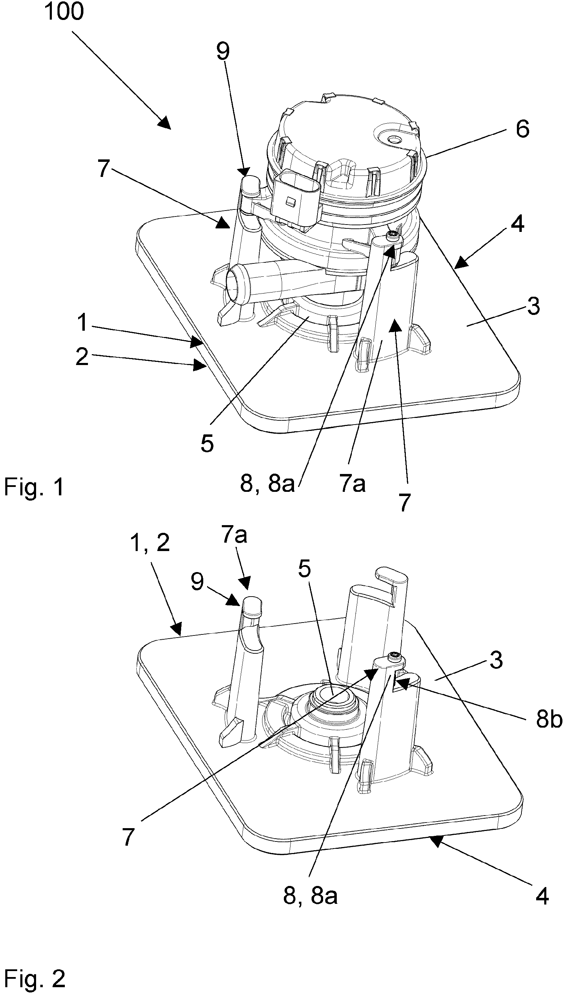

Fig. 1 shows a schematic perspective view of a coolant supply system 100 according to the invention. The coolant supply system 100 comprises a housing body 2 with a housing wall 3 and a channel unit 4, which is not shown in detail. There are ports 5 for a plurality of electrical actuator devices 6, which are not shown in detail here. A part of the housing body 2 is shown here with an electric actuator device 6 designed as a radial pump 6. A connection device 7 is included. Here, the electric actuator device 6 is connected to the housing body 2 by the connecting device 7 at the port 5. The connecting device 7 is used to establish a connection between the actuator device 6 and the housing body 2 so that the flow can be influenced. The connecting device 7 is intended to connect the electric actuator device 6 to the housing body 2 by moving the electric actuator device 7 relative to the housing body 2. For this purpose, the connecting device 7 comprises six form elements 7a, which are formed in pairs on the housing body 2 and the electric actuator device 6. The form elements 7a of the electric actuator device 6 and the housing body 2 are designed to interlock in pairs. The connecting device 7 is designed here as a bayonet lock.

The form elements 7a of the electric actuator device 6 are positively engaged in the form elements 7a of the housing body 2. A latching unit 9 and a clamping unit 9, which is not shown in detail, are formed on each of the interlocking form elements 7a. The latching unit 9 and the clamping unit 9 fix the electric actuator device 6 in place when the connection is made, but the connection can also become loose again, particularly due to vibrations. For this reason, a securing unit 8 with a securing element 8a is provided to secure the connection. The securing element 8a is designed here as a bolt 8a which is located in a receiving element 8b designed here as a blind hole 8b, which extends through both form elements 7a of the pair of interlocking form elements 7a. The securing element 8a is mounted here after the connection between the electric actuator device 6 and the housing body 2 has been established. Here, the threaded bolt 8a is inserted into the blind hole 8b. There is exactly one locking unit 8. A subsequent checking after the connection has been established is no longer necessary due to the locking unit 8. The connection is secured by the securing element 8a and can no longer come loose on its own, e.g. due to vibrations or shocks. There is a transition fit between the securing element 8a and the receiving element 8b, so that the electrical actuator device 6 is precisely aligned with the housing body 2. This can significantly reduce assembly costs, as additional testing of the fluid-tight connection is no longer necessary after the securing element 8a has been mounted.

The housing body 2 and a housing of the electric actuator device 6 are designed here as injection-molded plastic parts. Injection-molded plastic parts are inexpensive in series production. In addition, the form elements 7a of the connecting device 7 and a receiving element 8b of a securing unit 8 can be integrally molded and/or co-molded during injection molding. Furthermore, the form elements 7a include wedge elements, which are not shown in detail here, which pretension the electric actuator device 6 against the housing body 2 when the connection is made. This reliably closes even small gaps.

To establish and secure the connection the electric actuator device 6 is positioned at the port 5. The actuator device 6 is then connected to the housing body 2 by a rotary movement through the connecting device 7. The securing element 8a is then fitted to secure the connection.

Fig. 2 shows a schematic perspective view of the partial housing body 2 in the area of the connection 5 for an electric actuator device 6 of the coolant supply system 100 according to the invention. The form elements 7a of the connection device 7 are arranged here on a circumference. The form elements 7a of the electrical actuator device 6 can be accommodated here in the form elements 7a of the housing body 2. The securing unit 8 is shown here with the securing element 8a, which is mounted in the receiving element 8b.

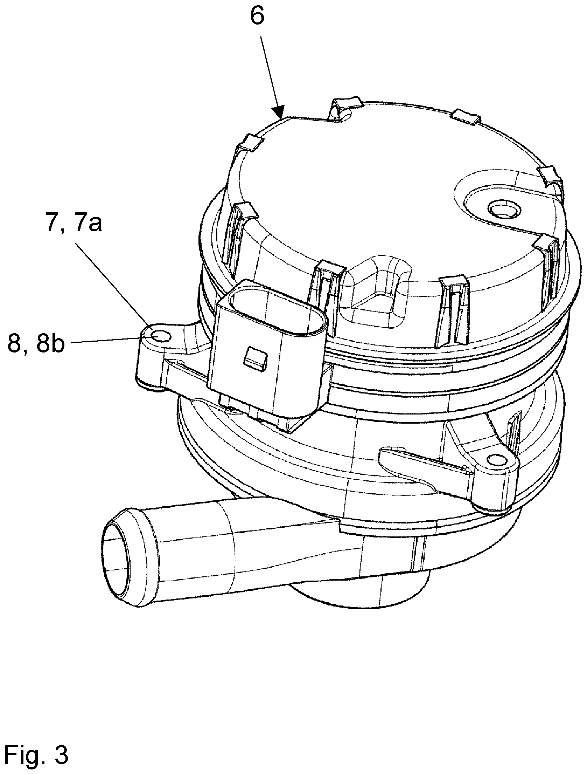

Fig. 3 shows a schematic perspective view of the electric actuator device 6, which is designed as a radial pump 6, with the form elements 7a of the connecting device 7. A part of the receiving element 8a is formed on a form element 7a here.

### List of reference signs

- 1: coolant distribution unit
- 2: housing body
- 3: housing wall
- 4: channel unit
- 5: port
- 6: electric actuator device, radial pump
- 7: connecting device
- 7a: form element
- 8: securing unit
- 8a: securing element
- 8b: receiving element
- 9: latching unit, clamping unit
- 100: coolant supply system

## Claims

1. A coolant supply system (100) for vehicles for supplying at least two devices to be cooled with at least one coolant comprising at least one coolant distribution unit (1), comprising:
- at least one housing body (2) with at least one housing wall (3); and
- at least one channel unit (4), which is at least partially formed by the housing wall (3), with at least one plurality of ports (5);
- at least one plurality of electric actuator devices (6) which can be accommodated on the housing body (2) at the ports (5); and
- a connecting device (7) for establishing a connection between the actuator device (6) and the housing body (2), so that a flow of the coolant can be influenced, the connecting device (7) being provided for connecting the electric actuator device (6) to the housing body (2) solely by moving the electric actuator device (6) relative to the housing body (4),
**characterized in that** a securing unit (8) is included, and wherein the securing unit (8) includes a mountable securing element (8a) for securing the connection.

2. Coolant supply system (100) according to claim 1, wherein the securing unit (8) comprises a receiving element (8b) for the securing element (8a).

3. Coolant supply system (100) according to the preceding claim, wherein the receiving element (8b) is designed as an opening (8b), in particular as a blind hole.

4. Coolant supply system (100) according to the preceding claim, wherein the connecting device (7) has interlocking form elements (7a) on the housing body (4) and the electric actuator device (7) to establish the connection, and wherein the receiving element (8b) is formed on a form element (7a).

5. Coolant supply system (100) according to the preceding claim, wherein the receiving element (8b) is formed on a pair of interlocking form elements (7a).

6. Coolant supply system (100) according to one of the three preceding claims, wherein the securing element (8a) can be received in the receiving element (8b) without play.

7. Coolant supply system (100) according to one of the preceding claims,
wherein the securing element (8a) is designed as a bolt and in particular as a threaded bolt.

8. Coolant supply system (100) according to one of the preceding claims, comprising exactly one securing unit (8) with exactly one securing element (8a).

9. Coolant supply system (100) according to one of the preceding claims,
wherein the connecting device (7) comprises a latching unit and/or clamping unit (9).

10. Coolant supply system (100) according to one of the preceding claims, the connecting device (7) is formed at least partially integrally with the housing body (4) and/or with the electric actuator device (6).

11. Coolant supply system (100) according to one of the preceding claims, at least partially formed as a plastic injection molded part.

12. Coolant supply system (100) according to one of the preceding claims,
wherein the electric actuator device (6) is designed as a radial pump.

13. Method for establishing a connection of an electric actuator device (6) to a housing body (2) of a coolant supply system (100) according to one of the preceding claims, comprising at least the following method steps:
- making the connection by moving, in particular rotating, the electric actuator device (6) relative to the housing body (2); and
- secure the connection by fitting the securing element (8a) of the securing unit (8).
